# EUROPÄISCHE PATENTSCHRIFT

(11) **EP 0 370 951 B1**
(45) Veröffentlichungstag und Bekanntmachung des Hinweises auf die Patenterteilung: **11.08.1993**
(21) Anmeldenummer: 89810860.0
(22) Anmeldetag: 09.11.1989
(51) Int. Cl.: A01N 43/653

(54) **Mikrobizide Mittel**
Microbicidal agents
Agents microbicides

(30) Priorität: 18.11.1988 CH 4284/88
(43) Veröffentlichungstag der Anmeldung: 30.05.1990
(73) Patentinhaber: CIBA-GEIGY AG, 4002 Basel (CH)
(72) Erfinder: Mittermeier, Ludwig, Dr., D-7800 Freiburg (DE); Ruess, Wilhelm, CH-4148 Pfeffingen (CH)

(56) Entgegenhaltungen:
- EP-A- 0 235 082
- BRIGHTON CROP PROTECTION CONFERENCE-PESTS AND DISEASES, Nr. 2, 1988, Seiten 543-550, British Crop Protection Councel, Thornton Heath, GB; W. RUESS et al.: "CGA 169374, a new systemic fungicide with a novel broad-spectrum activity against disease comlexes in a wide range of crops"
- RESEARCH DISCLOSURE, Nr. 297, Januar 1989, Seite 13, Offenbarung Nr. 29718, Kemeter Mason Publications Ltd, Emsworth, GB; N.N.: "Fungicidal mixtures of CGA 169374 with other fungicides for controlling cereal diseases"
- RESEARCH DISCLOSURE, Nr. 297, Januar 1989, Seite 38, Offenbarung Nr. 29748, Kemeter Mason Publications Ltd, Emsworth, GB; N.N.: "Combinations of microbiocides for improved plant protection in pomefruit"

## Beschreibung

Die vorliegende Erfindung betrifft mikrobizide Gemische mit synergistisch gesteigerter Wirkung gegen Pflanzenkrankheiten und Verfahren zur Anwendung solcher Gemische, insbesondere in Getreide.

Die Erfindung bezieht sich insbesondere auf die Bekämpfung bzw. Verhütung von Krankheiten im Getreide-Anbau.

Als eine unerwartet günstige Mischung hat sich eine Kombination der Wirkstoff-Komponente I), 1-[2-(2,4-Dichlorphenyl)-4-propyl-1,3-dioxolan-2-ylmethyl]-1H-1,2,4-triazol (=Propiconazol) der Formel I 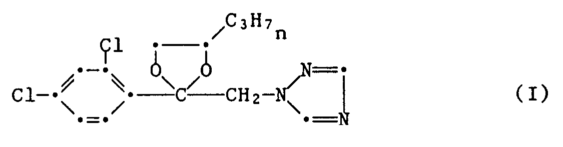
oder eines ihrer Salze mit der Wirkstoff-Komponente II), 1-{2-[2-Chlor-4-(4-chlorphenoxy)-phenyl]-4-methyl-1,3-dioxolan-2-ylmethyl}-1H-1,2,4-triazol der Formel II 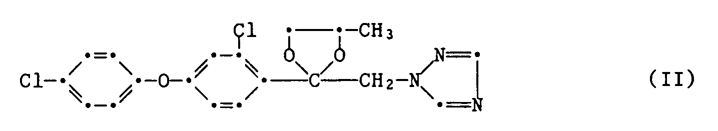
oder eines ihrer Salze erwiesen.

Die Verbindung der Formel I wird in der GB-A-1,522,657 beschrieben.

Die Verbindung der Formel II ist als fungizide Aktivsubstanz in der GB-A-2,098,607 beschrieben. Die Wirkung dieser beiden Triazolderivate beruht vor allem auf der Hemmung der Ergosterin-Biosynthese im Entwicklungszyklus von pflanzenpathogenen Pilzen.

Die erwähnten Salze der Verbindungen I und II können durch Umsetzung der jeweiligen Base mit Säuren hergestellt werden.

Unter den geeigneten Säuren seien genannt:
Halogenwasserstoffsäure wie Fluorwasserstoffsäure, Chlorwassserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe der basischen Komponente I oder II ein. Diese Komplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen Kobalt, Nickel, Kupfer, Zink usw. Bevorzugt sind die Nebengruppen-Elemente der 4. Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten.

Ueberraschend wurde aber gefunden, dass die Kombination der Wirkstoffe I und II zu einer ganz unerwartet hohen Wirkungssteigerung gegen saat-, luft- und bodenbürtige Pilze führt. Die durch die erfindungsgemässe Kombination erzielte Wirkungssteigerung ist entschieden grösser als die durch Addition der Aktivitäten der beiden einzelnen Komponenten zu erwartende Aktivität.

Die vorliegende Erfindung bezieht sich nicht allein auf Gemische der Komponenten I und II, sondern auch auf die Anwendung der als mikrobizides Mittel formulierten einzelnen Komponenten I und II in unmittelbarer Folge.

Günstige Mischungsverhältnisse der beiden Wirkstoffe sind I:II = 10:1 bis 1:10, besonders I:II = 5:1 bis 1:5 und ganz besonders 4:1 bis 1:4. Andere Mischungsverhältnisse sind I:II = 2:3, 1:3, 1:2, 2:5, 1:1, 5:2, 3:1, 2:1, 3:2 und 2,8:1. Insbesondere ist der Mischungsbereich I:II = 3:1 bis 3:2 bevorzugt. In diesem Bereich tritt eine besonders günstige Interaktion beider Wirkstoffe in Gesamtaufwandmengen von 100-200 g/ha auf.

Die Kombination der Aktivkomponenten I und II gemäss der vorliegenden Erfindung haben nützliche systemische, protektive und kurative Wirkung sowie Residualwirkung bei der Bekämpfung der saat- und bodenbürtigen Pflanzenkrankheiten. Durch die erfindungsgemässen Kombinationen werden die Mikroorganismen in und auf der Pflanze zerstört und die sich in Entwicklung befindlichen Pflanzen werden vor dem Angriff der Mikroorganismen geschützt.

Verbindung I, Propiconazol, ist ein im Handel bekanntgewordenes Fungizid zur Bekämpfung von verschiedenen Getreidekrankheiten wie Erysiphe spp., Puccinia spp., Pyrenophora spp. Helminthosporium spp.), Rhynchosporium spp. und andere.

Verbindung II ist ein Breitspektrum-Fungizid zur Bekämpfung von echten Mehltau-Arten (Erysiphe spp.), Rostkrankheiten (Puccinia spp., Hemileia u.a.), Blattflecken-Befall (Septoria spp., Pyrenophora spp.) und anderen. Besonders nachhaltig werden neben Rost und Blattflecken Schwärze-Pilze wie Alternaria spp. und Cladosporium spp. bekämpft.

Die kombinierte Anwendung beider Verbindungen in Getreide, sei es als fertige Mischung oder als Tankmix, liefert eine unerwartet nachhaltige Aktivitätssteigerung im Vergleich zu den benötigten Aufwandmengen bei Einsatz der Einzelverbindungen, beispielsweise bei der Bekämpfung von Septoria spp. am Blatt oder an der Aehre. Das Gleiche gilt für die Verhütung des Befalls mit Puccinia recondita, Pyrenophora spp. und Fusarium spp. Die weitestgehende Verhütung dieser Getreidekrankheiten liefert höhere Hektar-Erträge bei deutlich verbesserter Qualität des Ernteguts.

Mit der erfindungsgemässen Zweikomponenten-Mischung aus I und II wird nicht nur ein protektiver, sondern vor allem ein kurativer Schutz in all jenen Fällen erzielt, wo die Krankheit die Pflanze bereits befallen hat und die ersten Anzeichen der Ausbreitung sichtbar werden. Dieses Ergebnis wird insbesondere bei Rostbefall (Puccinia recondita) beobachtet, der auch in diesem Stadium noch vollständig bekämpft werden kann. Wichtig ist diese vorteilhafte Eigenschaft in allen landwirtschaftlichen Produktionssystemen, die auf witterungs-, temperatur- und epidemie-bedingten Befalls-Voraussagen basieren. Mit einer solchen Mischung wird dem Anwender ein sehr flexibles Instrument in die Hand gegeben, um auch noch in einem fortgeschrittenen Befallsstadium die Ausbreitung der Krankheit zu verhindern.

Die erfindungsgemässen Gemische sind gegen phytopathogene Pilze aktiv, welche den folgenden Klassen angehören: Ascomycetes (z.B. die Gattungen Mycosphaerella, Pyrenophora); Basidiomycetes (z.B. die Gattungen Tilletia, Rhizoctonia); Fungi imperfecti (z.B. die Gattungen Fusarium, Septoria, Phoma, Alternaria). Weitere schwer bekämpfbare Species, die mit der erfindungsgemässen Mischung überraschend gut kontrolliert werden können, sind Cercospora, Cercosporidium, Ascochyta, Ramularia, Venturia, Guignardia, Colletotrichum. Die erfindungsgemässen Kombinationen sind insbesondere bei Blatt- und Aehrenbehandlung wirksam, sie eignen sich jedoch ebenfalls für die direkte Behandlung des Saatguts oder anderer Pflanzenteile (Frucht, Knollen, Körner). Sie weisen eine gute Pflanzenverträglichkeit auf und sind ökologisch unbedenklich.

Bei seiner Verwendung wird das erfindungsgemässe Gemisch normalerweise zusammen mit den in der Formulierungstechnik üblichen Hilfsmitteln eingesetzt. Die Aktivkomponenten der Formeln I und II werden z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Enkapsulierung in z.B. polymeren Stoffen in bekannter Weise verarbeitet. Die Anwendungsverfahren wie Versprühen, Vernebeln, Verstäuben, Verstreuen, Bestreichen oder Giessen und die Form des Mittels werden den angestrebten Zielen und den gegebenen Verhältnissen angepasst. Günstige Aufwandmengen liegen im allgemeinen bei 50 g bis 700 g Gesamt-Aktivsubstanz pro Hektar, wobei sich der Anteil an I (Propiconazol) zwischen 25 g bis 400 g AS/ha bewegt, während der Anteil an II etwa 25 g bis 300 g AS/ha beträgt, z.B. 75 bis 150 g I + 40 bis 125 g II, z.B. I/II = 125 g/50 g oder I/II = 75 g/75 g.

Als Zielkulturen gelten im Rahmen dieser Erfindung beispielsweise folgende Pflanzenarten: Getreide: (Weizen, Gerste, Roggen, Hafer, Reis, Sorghum, Mais und Verwandte); Rüben (Zucker- und Futterrüben); Hülsenfrüchte: (Bohnen, Linsen, Soja, Erbsen); Oelkulturen: (Raps, Senf, Mohn, Erdnüsse, Oliven, Sonnenblumen); Gurkengewächse: (Gurken, Kürbis, Melonen); Fasergewächse: (Baumwolle, Flachs); Gemüsesorten: (Kohlarten, Spinat, Möhren, Zwiebeln, Knoblauch, Tomaten, Kartoffeln, Paprika); Zierpflanzen: (Tulpen, Osterglocken, Dahlien, Chrysanthemen und andere Blumen); Tee-, Kaffe-, Kakao- und Mangopflanzen, Gewürzkräuter und ihre Samen; Kernobst (Aepfel, Birnen), Steinobst (Kirschen, Zwetschgen, Pfirsiche, Nektarinen); Weinreben; Zierrasen.

Ein bevorzugtes Verfahren zum Aufbringen des erfindungsgemässen Gemisches besteht in einem Besprühen oder Benetzen des Pflanzenmaterials mit einer flüssigen Aufbereitung oder der Behandlung des Pflanzenmaterials mit einer festen Aufbereitung der Aktivsubstanz.

Die Wirkstoffe der Formeln I und II werden erfindungsgemäss in Form von Zusammensetzungen verwendet und können zusammen mit gegebenenfalls weiteren in der Formulierungstechnik üblichen Trägerstoffen, Tensiden oder anderen applikationsfördernden Zusätzen eingesetzt werden.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Dünge-mitteln.

Ein bevorzugtes Verfahren zur Applikation eines Gemisches von Wirkstoffen der Formeln I und II bzw. eines (agro)chemischen Mittels, das diese Wirkstoffe enthält, ist das Aufbringen auf das Blattwerk bzw. die Aehren, soweit es sich um Getreide handelt. Anzahl der Applikationen und Aufwandmenge richten sich dabei nach dem Befallsdruck für den entsprechenden Erreger (Pilzsorte). Das Wirkstoffgemisch kann aber auch über den Erdboden durch das Wurzelwerk in die Pflanze gelangen (systemische Wirkung), indem man den Standort der Pflanze mit einer flüssigen Zübereitung tränkt oder die Substanzen in fester Form in den Boden einbringt, z.B. in Form von Granulat (Bodenapplikaton). Das Gemisch der Verbindungen der Formeln I und II kann nach einem besonders bevorzugten Verfahren auf Samenkörner, Knollen, Früchte oder sonstiges zu schützendes Pflanzenmaterial aufgebracht werden (Coating), indem man das Material entweder mit einer flüssigen Zübereitung der Wirkstoffe tränkt oder mit einer festen Zübereitung beschichtet. Darüber hinaus sind in besonderen Fällen weitere Applikationsarten möglich, so z.B. die gezielte Behandlung der Pflanzenstengel oder der Knospen.

Die Verbindungen der Formeln I und II werden dabei in unveränderter Form oder vorzugsweise zusammen mit den in der Formulierungstechnik üblichen Hilfsmittel eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt.

Die Formulierungen, d.h. die den Wirkstoff der Formeln I und II und gegebenenfalls einen festen oder flüssigen Zusatzstoff enthaltenden Mittel, Zübereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen C₈ bis C₁₂, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethylenglykolmonomethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle oder Sojaöl; oder Wasser.

Als feste Trägerstoffe, z.B. für Stäubemittel und dispergierbare Pulver, lassen sich Calcit, Talkum, Kaolin, Montmorillonit oder Attapulgit, hochdisperse Kieselsäure oder saugfähige Polymerisate verwenden. Als gekörnte, adsorptive Granulatträger kommen Bimsstein, Ziegelbruch, Sepiolit oder Bentonit, als nicht-sorptive Träger z.B. Calcit oder Dolomit in Frage.

Als oberflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:
"Mc Cutcheon's Detergents and Emulsifiers Annual" MC Publishing Corp., Ridgewood New Jersey, 1980
Sisley and Wood, "Encyclopedia of Surface Active Agents", Chemical Publishing Co., Inc. New York, 1980.

Die agrochemischen Zübereitungen enthalten in der Regel 0,1 bis 95 % Gesamt-Wirkstoff, 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Derartige (agro)chemische Mittel sind ein Bestandteil der vorliegenden Erfindung.

Die nachfolgenden Beispiele dienen der Illustration der Erfindung, wobei "Wirkstoff" ein Gemisch aus "Propiconazol" I und der Verbindung II in einem bestimmten Mischungs-Verhältnis 10:1 bis 1:10 bedeutet.

| Spritzpulver | a) | b) | c) |
|---|---|---|---|
| Wirkstoff (I:II = 10:1, 5:2, 1:3) | 25 % | 50 % | 75 % |
| Na-Ligninsulfonat | 5 % | 5 % | |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:II = 4:1) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| Stäubemittel | a) | b) |
|---|---|---|
| Wirkstoff (I:II = 3:2 und 1:1) | 5 % | 8 % |
| Talkum | 95 % | - |
| Kaolin | - | 92 % |

Man erhält anwendungsfertige Stäubemittel, indem der Wirkstoff mit dem Träger vermischt und auf einer geeigneten Mühle vermahlen wird.

| Extruder Granulat | |
|---|---|
| Wirkstoff (I:II = 5:2) | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 3:2) | 3 % |
| Polyethylenglykol (MG 200) | 3 % |
| Kaolin (MG = Molekulargewicht) | 94 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

### Biologische Beispiele

### Beispiel 1: Wirkung gegen Puccinia graminis auf Weizen

### a) Residual-protektive Wirkung

Weizenpflanzen werden 6 Tage nach der Aussaat mit einer aus Spritzpulver der beiden Wirkstoffe (I:II = 5:2) hergestellten Spritzbrühe (6 ppm Aktivsubstanz) besprüht. Nach 24 Stunden werden die behandelten Pflanzen mit einer Uredosporensuspension des Pilzes infiziert. Nach einer Inkubation während 48 Stunden bei 95-100 % relativer Luftfeuchtigkeit und ca. 20°C werden die infizierten Pflanzen in einem Gewächshaus bei ca. 22°C aufgestellt. Die Beurteilung der Rostpustelnentwicklung erfolgt 12 Tage nach der Infektion.

### b) Systemische Wirkung

Zu Weizenpflanzen wird 5 Tage nach der Aussaat eine aus Spritzpulver des Wirkstoffes hergestellte Spritzbrühe gegossen (2 ppm Aktivsubstanz bezogen auf das Bodenvolumen). Nach 48 Stunden werden die behandelten Pflanzen mit einer Uredosporensuspension des Pilzes infiziert. Nach einer Inkubation während 48 Stunden bei 95-100 % relativer Luftfeuchtigkeit und ca. 20°C werden die infizierten Pflanzen in einem Gewächshaus bei ca. 22°C aufgestellt. Die Beurteilung der Rostpustelnentwicklung erfolgt 12 Tage nach der Infektion.

Sowohl im Test a) wie b) war die Ausbreitung der Krankheit vollständig verhindert worden (= 100 % Wirkung).

### Beispiel 2: Wirkung gegen Erysiphe graminis auf Gerste

### a) Residual-protektive Wirkung

Ca. 8 cm hohe Gerstenpflanzen werden mit einer aus Spritzpulver der beiden Wirkstoffe (I:II = 3:1) hergestellten Spritzbrühe (6 ppm Aktivsubstanz) besprüht. Nach 3-4 Stunden werden die behandelten Pflanzen mit Konidien des Pilzes bestäubt. Die infizierten Gerstenpflanzen werden in einem Gewächshaus bei ca. 22°C aufgestellt und der Pilzbefall nach 10 Tagen beurteilt.

### b) Systemische Wirkung

Zu ca. 8 cm hohen Gerstenpflanzen wird eine aus Spritzpulver des Wirkstoffes hergestellte Spritzbrühe gegossen (2 ppm Aktivsubstanz bezogen auf das Erdvolumen). Es wurde dabei darauf geachtet, dass die Spritzbrühe nicht mit den oberirdischen Pflanzenteilen in Berührung kam. Nach 48 Stunden werden die behandelten Pflanzen mit Konidien des Pilzes bestäubt. Die infizierten Gerstenpflanzen werden in einem Gewächshaus bei ca. 22°C aufgestellt und der Pilzbefall nach 10 Tagen beurteilt.

Sowohl im Test a) wie b) war die Ausbreitung der Krankheit vollständig verhindert worden (= 100 % Wirkung).

### Beispiel 3: Wirkung gegen Helminthosporium sativum an Weizen

Auf natürliche Weise mit Helminthosporium sativum infizierter Winterweizen wird auf einer Mischrolle mit dem zu prüfenden Fungizid gebeizt, wobei eine Konzentration von 60 ppm AS (bezogen auf das Gewicht des Saatgutes) zur Anwendung gelangt.

Die Aktivsubstanz stellt ein 1:3-Gemisch der Komponenten I und II dar.

Der infizierte und behandelte Weizen wird im Oktober im Freiland mittels einer Sämaschine auf Parzellen von 2 m Länge und 3 Saatreihen mit dreifacher Wiederholung ausgesät.

Bis zur Befallsauswertung wird die Versuchspflanzung unter normalen Feldbedingungen kultiviert.

Zur Ermittlung der Wirkstoffaktivität wird der Auflauf der Pflanzen bonitiert. Weniger als 5 % der Pflanzen waren befallen.

### Beispiel 4: Wirkung gegen Fusarium an Roggen

Mit Fusarium nivale natürlich infizierter Roggen der Sorte Tetrahell wird auf einer Mischrolle mit dem zu prüfenden Fungizid gebeizt, wobei folgende Konzentrationen zur Anwendung gelangen: 20 oder 6 ppm AS (bezogen auf das Gewicht des Saatgutes). Die AS stellt ein 1:4-Gemisch der Komponenten I und II dar.

Der infizierte und behandelte Roggen wird im Oktober im Freiland mit einer Sämaschine auf Parzellen von 3 m Länge und 6 Saatreihen ausgesät. 3 Wiederholungen pro Konzentration.

Bis zur Befallsauswertung wird die Versuchspflanzung unter normalen Feldbedingungen kultiviert (vorzugsweise in einer Region mit geschlossener Schneedecke während der Wintermonate).

Zur Beurteilung der Phytotox wird im Herbst der Saatauflauf und im Frühling die Bestandesdichte/Bestockung bonitiert.

Zur Ermittlung der Wirkstoffaktivität wird im Frühjahr, unmittelbar nach der Schneeschmelze, der prozentuale Anteil Fusarium-befallener Pflanzen ausgezählt. Die Zahl befallener Pflanzen war im vorliegenden Falle kleiner als 5 %. Die aufgelaufenen Pflanzen hatten ein gesundes Aussehen.

### Beispiel 5: Wirkung gegen Septoria nodorum an Weizen

Weizenpflanzen werden im 3-Blatt-Stadium mit einer aus Spritzpulver der Wirksubstanzen (2,8:1) hergestellten Spritzbrühe (60 ppm AS) besprüht.

Nach 24 Stunden werden die behandelten Pflanzen mit einer Konidiensuspension des Pilzes infiziert. Anschliessend werden die Pflanzen während 2 Tagen bei 90-100 % relativer Luftfeuchtigkeit inkubiert und während 10 weiteren Tagen in einem Gewächshaus bei 20-24°C aufgestellt. 13 Tage nach der Infektion wird der Pilzbefall beurteilt. Weniger als 1 % der Weizenpflanzen wiesen einen Befall auf.

## Patentansprüche

1. Pflanzenmikrobizides Mittel enthaltend mindestens zwei Wirkstoff-Komponenten, dadurch gekennzeichnet, dass die eine Komponente I) 1-[2-(2,4-Dichlorphenyl)-4-propyl-1,3-dioxolan-2-ylmethyl]-1H-1,2,4-triazol der Formel I 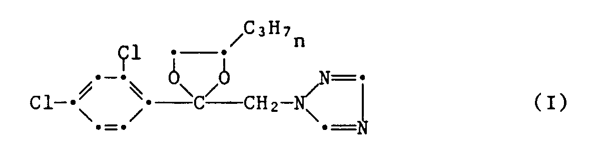 oder eines ihrer Salze und die andere Komponente II) 1-{2-[2-Chlor-4-(4-chlorphenoxy)-phenyl]-4-methyl-1,3-dioxolan-2-ylmethyl}-1H-1,2,4-triazol der Formel II 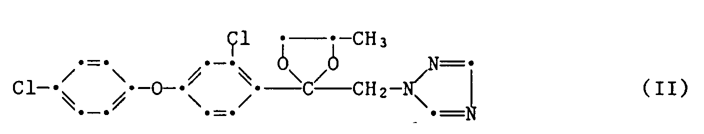 oder eines ihrer Salze ist, zusammen mit geeigneten Trägerstoffen, wobei die Wirkstoffmenge I + II so gewählt sind, daß einen syrengistisch gesteigerten Wirkungseffekt verursacht ist.

2. Mittel gemäss Anspruch 1, dadurch gekennzeichnet, dass das Gewichtsverhältnis I:II = 10:1 bis 1:10 beträgt.

3. Mittel gemäss Anspruch 2, dadurch gekennzeichnet, dass das Gewichtsverhältnis I:II = 5:1 bis 1:5 beträgt.

4. Mittel gemäss Anspruch 2, dadurch gekennzeichnet, dass das Gewichtsverhältnis I:II = 4:1 bis 1:4 beträgt.

5. Mittel gemäss Anspruch 2, dadurch gekennzeichnet, dass das Gewichtsverhältnis I:II = 3:1 bis 3:2 beträgt.

6. Verfahren zur Bekämpfung oder Verhütung von Pflanzenkrankheiten, dadurch gekennzeichnet, dass man in beliebiger Reihenfolge oder gleichzeitig die durch Infektion befallene oder gefährdete Stelle der Pflanze mindestens mit einem Wirkstoff der Formel I und einem Wirkstoff der Formel II in einem Gewichtsverhältnis I:II = 10:1 bis 1:10 behandelt.

7. Verfahren gemäss Anspruch 6, dadurch gekennzeichnet, dass Getreide behandelt wird.

8. Verfahren gemäss Anspruch 6, dadurch gekennzeichnet, dass Gemüse, Kartoffeln und Zuckerrüben behandelt werden.

## Claims

1. A plant microbicidal composition comprising at least two active ingredient components, wherein one component I) is 1-[2-(2,4-dichlorophenyl)-4-propyl-1,3-dioxolan-2-ylmethyl]-1H-1,2,4-triazole of formula I 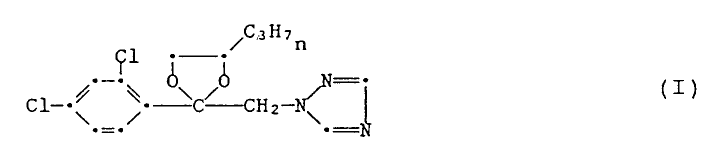 or a salt thereof, and the other component II) is 1-{2-[2-chloro-4-(4-chlorophenoxy)-phenyl]-4-methyl-1,3-dioxolan-2-ylmethyl}-1H-1,2,4-triazole of formula II 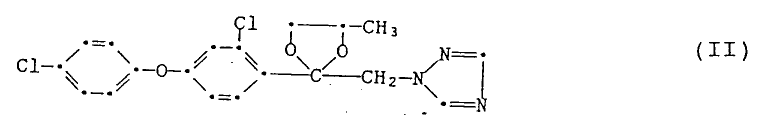 or a salt thereof, together with suitable carriers, the amounts of active ingredients I and II being so selected as to cause a synergistically increased effect.

2. A composition according to claim 1, wherein the ratio by weight of I:II is from 10:1 to 1:10.

3. A composition according to claim 2, wherein the ratio by weight of I:II is from 5:1 to 1:5.

4. A composition according to claim 2, wherein the ratio by weight of I:II is from 4:1 to 1:4.

5. A composition according to claim 2, wherein the ratio by weight of I:II is from 3:1 to 3:2.

6. A method of controlling or preventing plant diseases, which comprises treating the plant locus which is already infected, or is liable to be infected, in any sequence or simultaneously, at least with one active ingredient of formula I and one active ingredient of formula II in a ratio by weight I:II of from 10:1 to 1:10.

7. A method according to claim 6, wherein cereal is treated.

8. A method according to claim 6, wherein vegetables, potatoes and sugar beet are treated.

## Revendications

1. Agent microbicide pour les plantes contenant au moins deux composants actifs, caractérisé en ce que l'un des composants I) est le 1-[2-(2,4-dichlorophényl)-4-propyl-1,3-dioxolan-2-ylméthyl]-1H-1,2,4-triazole de formule I 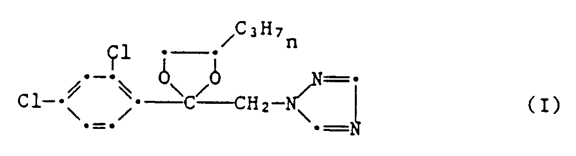 ou l'un de ses sels et l'autre composant II) est le 1-{2-[2-chloro-4-(4-chlorophénoxy)-phényl]-4-méthyl-1,3-dioxolan-2-ylméthyl}-1H-1,2,4-triazole de formule II 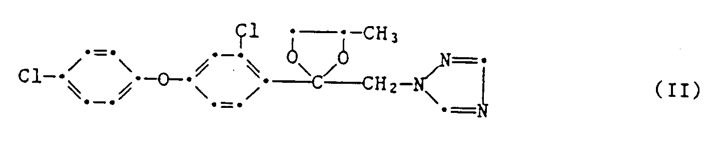 ou l'un de ses sels, associés à des supports appropriés, les quantités des substances actives I + II étant choisies de telle façon que s'ensuive une activité synergiquement accrue.

2. Agent selon la revendication 1, caractérisé en ce que le rapport pondéral I:II est compris entre 10:1 et 1:10.

3. Agent selon la revendication 2, caractérisé en ce que le rapport pondéral I:II est compris entre 5:1 et 1:5.

4. Agent selon la revendication 2, caractérisé en ce que le rapport pondéral I:II est compris entre 4:1 et 1:4.

5. Agent selon la revendication 2, caractérisé en ce que le rapport pondéral I:II est compris entre 3:1 et 3:2.

6. Procédé pour lutter contre ou prévenir les maladies des plantes, caractérisé en ce que l'on traite, dans un ordre quelconque ou simultanément, l'endroit où se trouve la plante atteint par l'infection ou exposé à l'infection, avec au moins une substance active de formule I et une substance active de formule II dans un rapport pondéral I:II allant de 10:1 à 1:10.

7. Procédé selon la revendication 6, caractérisé en ce que l'on traite les céréales.

8. Procédé selon la revendication 6, caractérisé en ce que l'on traite les légumes, pommes de terre et betteraves sucrières.
